(19) Europäisches Patentamt

European Patent Office

Office européen des brevets

(11) **EP 1 376 101 A1**

(12) **DEMANDE DE BREVET EUROPEEN**

(43) Date de publication:
**02.01.2004 Bulletin 2004/01**

(51) Int Cl.⁷: **G01N 21/47**

(21) Numéro de dépôt: **03291458.2**

(22) Date de dépôt: **17.06.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **18.06.2002 FR 0207467**

(71) Demandeur: **LABORATOIRE CENTRAL DES PONTS ET CHAUSSEES**
**75015 Paris (FR)**

(72) Inventeurs:
• **Guillard, Yannick**
  **67130 Wasselonne (FR)**
• **Goyat, Yann**
  **67540 Ostwald (FR)**
• **Chassaing, Paul**
  **49100 Angers (FR)**

(74) Mandataire: **Dronne, Guy et al**
**Cabinet Beau de Loménie,**
**158, rue de l'Université**
**75340 Paris Cedex 07 (FR)**

(54) **Dispositif de mesure de caractéristiques photométriques d'un matériau**

(57) L'invention concerne un dispositif de mesure de caractéristiques photométriques d'un matériau (22), qui comporte :

- des moyens d'élaboration (16) d'un arrangement de N faisceaux lumineux secondaires collimatés et homogènes (IV), chacun desdits N faisceaux lumineux (IV) permettant d'insoler une surface déterminée (20, 28) dudit matériau (22) selon un premier angle d'incidence $\gamma$ défini par rapport à la normale ($\vec{n}$) à ladite surface à insoler (20, 28) et selon un second angle d'incidence $\beta$ défini dans un plan (P) de ladite surface à insoler (20, 28),

- un capteur de luminance (24) pour capter la luminance réfléchie (V) par ladite surface insolée (20, 28), ledit capteur de luminance (24) étant écarté d'un angle d'observation $\alpha$ sensiblement égal à 1° par rapport audit plan (P) de la surface à insoler (20, 28),

- des moyens d'acquisition et de traitement (18) du signal transmis par ledit capteur de luminance (24).

FIG.1B

EP 1 376 101 A1

## Description

La présente invention concerne un dispositif de mesure de caractéristiques photométriques d'un matériau.

L'optimisation des installations d'éclairage public et la synthèse d'images de sites urbains nécessitent, entre autres, la connaissance des caractéristiques photométriques des surfaces des chaussées.

La lumière arrivant sur ces surfaces se réfléchit en se transformant en sources lumineuses. Cette réflexion est caractérisée par la luminance de la surface observée.

En conséquence, l'analyse du rapport entre la luminance de la surface observée et de son éclairement permet de déterminer un paramètre caractéristique, qui est le coefficient de luminance réfléchie q.

Ce coefficient de luminance réfléchie q ($\alpha$, $\beta$, $\gamma$) dépend de l'angle d'observation $\alpha$ de la luminance, des angles d'incidence $\beta$ et $\gamma$ de l'insolation.

Il existe un dispositif de mesure de caractéristiques photométriques d'un matériau dans lequel on détermine ce coefficient de luminance réfléchie q ($\alpha$, $\beta$, $\gamma$) en laboratoire dans une chambre noire à l'aide d'un luminancemètre.

Cependant, ce dispositif connu, appelé gonio-photomètre, est très encombrant et ne permet pas de mesure *in situ.* Ce dispositif connu nécessite le prélèvement d'un échantillon du matériau à insoler pour en faire l'analyse en laboratoire.

La présente invention a pour but de proposer un dispositif de faible encombrement qui permet d'élaborer les caractéristiques photométriques d'un matériau *in situ* sans prélèvement, directement sur la surface à analyser.

Ce but est atteint grâce au fait que le dispositif comporte :

- des moyens d'élaboration pour élaborer un arrangement de N faisceaux lumineux secondaires collimatés et homogènes, chacun desdits N faisceaux lumineux permettant d'insoler successivement une surface déterminée dudit matériau selon un premier angle d'incidence $\gamma$ défini par rapport à la normale à ladite surface à insoler et selon un second angle d'incidence $\beta$ défini dans un plan de ladite surface à insoler,

- un capteur de luminance destiné à capter la luminance réfléchie par ladite surface insolée selon lesdits premier et second angles d'incidence $\gamma$ et $\beta$ par un desdits faisceaux lumineux secondaires, ledit capteur étant écarté d'un angle d'observation $\alpha$ sensiblement égal à 1° par rapport audit plan de la surface à insoler,

- des moyens d'acquisition et de traitement du signal transmis par ledit capteur de luminance en relation avec lesdits premier et second angles d'incidence $\gamma$ et $\beta$ pour élaborer lesdites caractéristiques photométriques dudit matériau insolé.

Ce type de mesure étant préférentiellement destiné à l'optimisation des installations d'éclairage public et à la synthèse d'images de sites urbains, l'angle d'observation $\alpha$ est sensiblement égal à 1° par rapport audit plan de la surface à insoler, pour correspondre à un angle selon lequel un conducteur percevrait la luminance réfléchie par un des dispositifs d'éclairage de la voie sur laquelle il circule. En fait, le Comité International de l'Eclairage (CIE) considère qu'une valeur représentative d'un tel angle d'observation est de l'ordre de 1°.

Ainsi, en fonction du faisceau lumineux secondaire en fonctionnement, on peut déterminer *in situ* la luminance observée sur ledit matériau insolé en relation avec les angles d'incidence $\gamma$ et $\beta$, correspondant à différents emplacements des dispositifs d'éclairage.

Quel que soit l'angle d'incidence, il est préférable et en outre préconisé par le CIE que la surface analysée soit d'environ 100 cm$^2$ au total pour être représentative du matériau contenant généralement des granulats de taille allant du micron au centimètre; or, chacun des faisceaux lumineux secondaires ne permet pas d'insoler une telle surface.

En conséquence, avantageusement, pour déterminer les caractéristiques photométriques dudit matériau insolé, il faut insoler une surface déterminée, préférentiellement égale à 100 cm$^2$, et chacun desdits faisceaux lumineux secondaires n'insole qu'une partie de ladite surface déterminée, chacune desdites parties de ladite surface déterminée étant préférentiellement de 20 cm$^2$.

Pour permettre d'établir la luminance globale pour l'ensemble de la surface à analyser, le dispositif comprend en outre avantageusement des moyens de déplacement pour que chacun desdits faisceaux lumineux secondaires insole successivement chacune desdites parties de ladite surface déterminée et lesdits moyens d'acquisition et de traitement du signal transmis par ledit capteur comportent des moyens d'élaboration des caractéristiques photométriques globales de ladite surface déterminée à partir du signal transmis par ledit capteur de luminance pour chacune desdites parties de ladite surface déterminée en relation avec lesdits premier et second angles d'incidence $\gamma$ et $\beta$.

Pour rendre compte de la luminance réfléchie par les dispositifs d'éclairage de la voie, différents premiers et seconds angles d'incidence y et $\beta$ sont imposés par le CIE.

En conséquence, avantageusement, la tangente du premier angle d'incidence $\gamma$ est comprise entre 0 et 12 et le second angle d'incidence $\beta$ est compris entre 0 et 180°.

L'insolation se faisant successivement pour chaque combinaison d'angles d'incidence, les moyens d'élaboration comportent avantageusement une source lumineuse principale émettant un faisceau lumineux principal et des moyens de traitement optique principal du faisceau lumineux principal pour générer un faisceau principal traité et les moyens d'élaboration comportent N ensembles de traitement optique secondaire et des moyens directifs pour diriger successivement ledit faisceau principal traité vers une entrée d'un des N ensembles de traitement optique secondaire, chacun desdits N ensembles de traitement optique secondaire permettant de traiter ledit faisceau lumineux principal traité en un faisceau lumineux secondaire homogène et collimaté. Avantageusement, les moyens de traitement optique principal sont situés entre ladite source lumineuse principale et lesdits N ensembles de traitement optique secondaire.

Les nombres de premiers et seconds angles d'incidence différents étant très importants : vingt-neuf pour les premiers angles d'incidence γ et vingt pour les seconds angles d'incidence β, ce qui, en combinaison, constitue une palette de cinq cent quatre-vingt mesures à effectuer. On comprend donc que pour des raisons d'encombrement du dispositif, il est préférable de diminuer au maximum le nombre d'ensembles de traitement optique secondaire et d'arranger ces derniers pour permettre de reconstruire l'ensemble des cinq cent quatre-vingt luminances à partir d'un nombre représentatif d'ensembles de traitement optique secondaire.

Ce nombre d'ensembles de traitement optique secondaire N est préférentiellement égal à vingt-sept.

L'invention sera bien comprise et ses avantages apparaîtront mieux à la lecture de la description détaillée qui suit, d'un mode de réalisation représenté à titre d'exemple non limitatif.

La description se réfère aux dessins annexés sur lesquels :

- la figure 1A est une vue d'ensemble du dispositif selon l'invention,
- la figure 1B est une vue schématique détaillée du dispositif de la figure 1A,
- la figure 2 est une vue schématique des moyens d'élaboration des N faisceaux secondaires collimatés et homogènes,
- la figure 3 est une coupe schématique détaillée de la source principale, des moyens de traitement optique principal et des moyens directifs,
- la figure 4 est une coupe schématique détaillée d'un ensemble de traitement optique secondaire,
- la figure 5 est une vue en coupe d'un élément d'un ensemble de traitement optique secondaire,
- la figure 6 est une vue schématique d'un capteur de luminance, et
- la figure 7 est une vue schématique des moyens de reconstruction de la luminance.

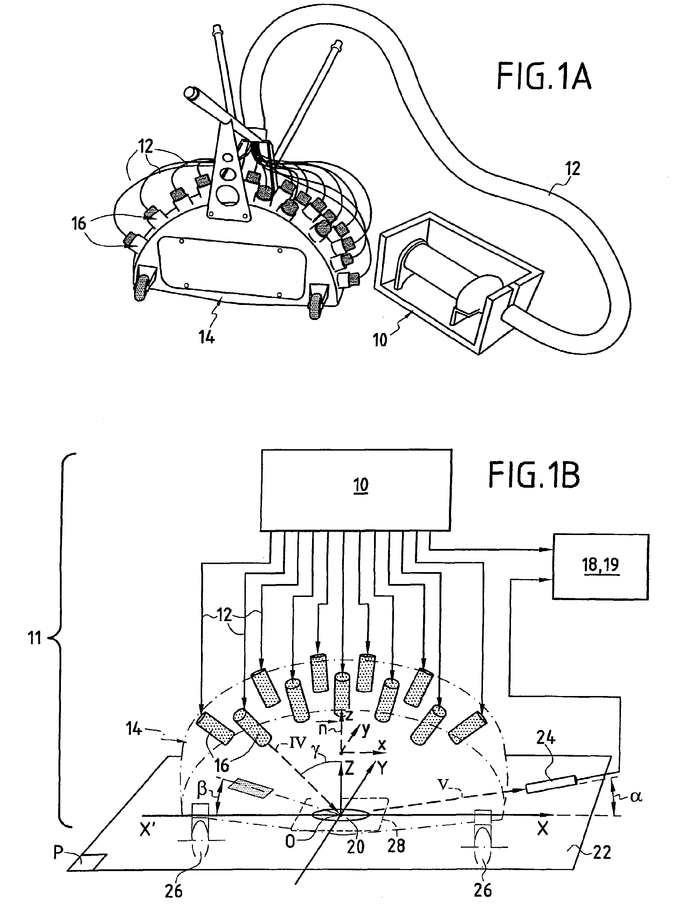

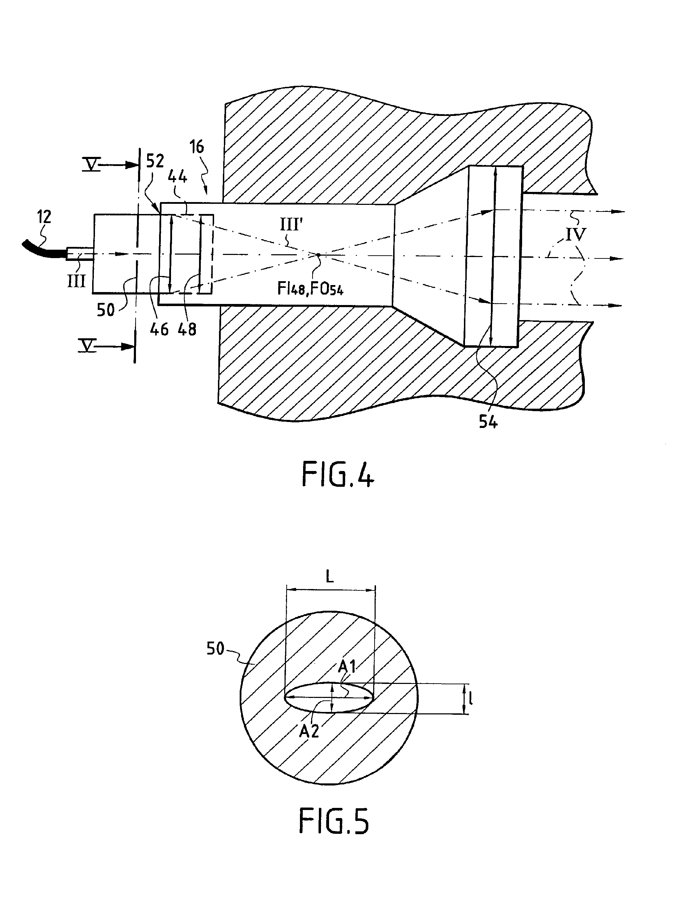

Le dispositif de mesure de caractéristiques photométriques d'un matériau illustré sur la figure 1A comporte un boîtier 10 dans lequel est située une source principale (non visible sur la figure 1A) relié par l'intermédiaire de N fibres optiques 12 à une tête mobile 14. Chacune de ces N fibres optiques est reliée à un ensemble de traitement optique secondaire 16 détaillée sur la figure 4.

L'ensemble composé du boîtier 10, des N fibres optiques et des N ensembles de traitement optique secondaire 16, forme des moyens d'élaboration 11 permettant d'élaborer N faisceaux lumineux secondaires IV homogènes et collimatés (voir figure 1B).

La figure 1B montre que le boîtier 10 est relié à des moyens d'acquisition et de traitement du signal 18 permettant d'enregistrer le flux lumineux émis par un des N ensembles de traitement optique secondaire 16 qui est illuminé, ainsi que la luminance réfléchie par le matériau.

En fait, le faisceau secondaire IV homogène et collimaté issu d'un des N ensembles de traitement optique secondaire 16 insole une partie 20 de surface d'un matériau 22 à analyser qui réfléchit à son tour la lumière reçue. La portion de lumière V réfléchie vers un capteur de luminance 24 permet de déterminer à l'aide de moyens d'acquisition et de traitement du signal 18, la luminance du matériau 22 en relation avec le faisceau secondaire IV émis.

Soit (O, X, Y, Z) un repère défini par rapport à la surface du matériau 22 à analyser. L'axe Z est confondu avec la normale $\bar{n}$ à ladite surface à insoler; le plan (XOZ) correspond au plan selon lequel est effectuée la mesure de la luminance par le capteur de luminance 24.

Le capteur de luminance 24 est incliné d'un angle α de visée sensiblement égal à 1° par rapport au plan (XOY) et est disposé sur la tête mobile 14. Cet angle est préférentiellement choisi dans le plan (XOZ), ce qui correspond à un écartement par rapport à l'axe des abscisses X'X, en particulier par rapport à X.

Chacun des N ensembles de traitement optique secondaire 16 est disposé sur la tête mobile 14 selon un premier angle d'incidence γ défini par rapport à la normale $\vec{n}$ et selon un second angle d'incidence β défini dans un plan P de ladite surface à insoler. Le premier angle d'incidence γ est défini par rapport à l'axe Z, tandis que le second angle d'incidence β est défini par rapport au capteur de luminance 24.

En fait, le second angle d'incidence β correspond à l'écartement entre l'ensemble de traitement optique secondaire 16 considéré et le capteur de luminance 24, ce qui revient, étant donnée la configuration de ce dernier, à considérer l'angle entre la projection orthogonale de l'ensemble de traitement optique secondaire 16 considéré 16' (ou du faisceau secondaire traité IV) sur la surface à analyser 22, donc le plan P ou le plan (XOY) et la direction de la projection de l'axe du capteur de luminance 24 dans ce même plan, soit par rapport à l'axe des abscisses X'X, en particulier par rapport à X'.

En fait, la tête mobile 14 comportant les N ensembles de traitement optique secondaire 16 et le capteur de luminance 24, est disposée sur un support mobile 26 présentant un repère (x, y, z) de manière à permettre son déplacement pour insoler toute la partie de la surface à analyser. En conséquence, dès lors que le support mobile 26 est placé sensiblement transversalement sur le matériau à analyser, son repère (x, y, z) est sensiblement confondu avec le repère (X, Y, Z) du matériau 22, de sorte que tous les angles de visée et d'incidence peuvent être définis dans le repère (x, y, z) du support mobile 26.

La surface déterminée 28 du matériau 22 à analyser est imposée par le Comité International de l'Eclairage (CIE) et est sensiblement égale à 100 cm$^2$, de manière à représenter un échantillonnage correct du matériau 22 qui présente généralement une structure ayant une granulométrie pouvant atteindre quelques centimètres. Cependant, chacun des N faisceaux lumineux secondaires IV ne permet d'insoler qu'un disque de diamètre sensiblement égal à 5 cm, ce qui correspond à une partie de surface 20 sensiblement égale à 20 cm$^2$. En conséquence, cinq mesures sont effectuées pour chaque faisceau lumineux IV, c'est-à-dire pour chaque paire d'angles d'incidence ($\alpha$, $\beta$), et sont traitées par des moyens de traitement et d'élaboration 19 fournis dans les moyens d'acquisition et de traitement 18, en étant préférentiellement moyennées, pour obtenir une luminance globale de la surface déterminée 28.

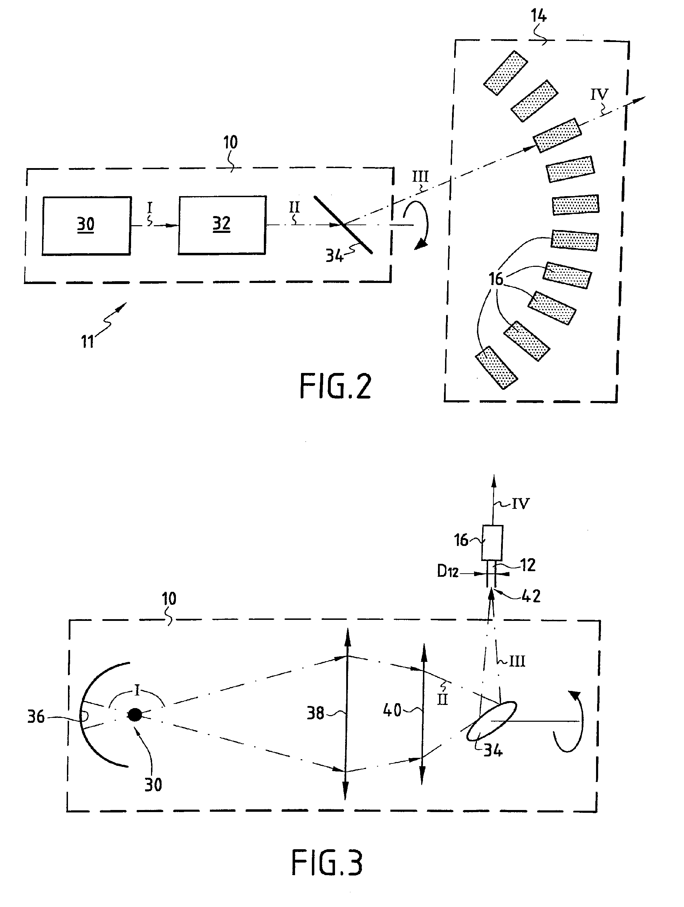

Pour générer un faisceau principal traité II, les moyens d'élaboration 11 comportent la source principale 30 unique émettant un faisceau principal I et des moyens de traitement optique principal 32, comme illustré sur la figure 2. En outre, pour permettre d'illuminer successivement chacune des N fibres optiques reliées aux ensembles de traitement optique secondaire 16, les moyens d'élaboration 11 comportent des moyens directifs 34, en l'espèce un miroir rotatif 34, qui sont disposés entre les moyens de traitement optique principal 32 et les N ensembles de traitement optique secondaire 16. Tous autres moyens directifs différents d'un miroir rotatif peuvent être envisagés.

Comme illustré sur la figure 3, pour traiter le faisceau principal I émis par la source lumineuse principale 30, les moyens de traitement optique principal 32 comportent un miroir sphérique 36 et au moins une optique de traitement. En l'espèce, les moyens de traitement optique principal 32 comportent deux optiques de traitement, une première lentille principale convergente 38 et une deuxième lentille principale convergente 40.

La première lentille principale convergente 38 présente un diamètre préférentiellement égal à 100 mm avec une focale de préférentiellement 150 mm et est disposée entre 150 mm et 200 mm de la source lumineuse principale 30, préférentiellement à 180 mm. La deuxième lentille principale convergente 40 présente un diamètre préférentiellement égal à 80 mm avec une focale de préférentiellement 100 mm et est disposée entre 200 mm et 250 mm de la source lumineuse principale 30, préférentiellement à 214 mm.

Cette disposition des moyens de traitement optique principal 32 permet de récupérer un maximum de flux émis par la source lumineuse principale 30, en l'espèce, par exemple une lampe halogène d'une puissance préférentiellement de l'ordre de 100 W et de l'envoyer vers une des N fibres optiques 12 qui présentent chacune un faible diamètre D12. En effet, ce faible diamètre D12, préférentiellement de l'ordre de 3 mm, implique d'avoir une direction stable et précise du faisceau lumineux principal traité II pour s'assurer de la bonne transmission du faisceau secondaire III renvoyé par le miroir rotatif 34 vers un des N ensembles de traitement optique secondaire 16.

On comprend mieux à présent l'intérêt d'avoir dissocié le boîtier 10 fixe, de la tête mobile 14 disposée sur le support 26 mobile. En effet, le boîtier 10 comporte la source lumineuse principale 30, mais surtout les moyens directifs 34 permettant de diriger successivement et précisément le faisceau principal traité II vers l'entrée 42 d'une des N fibres optiques 12. Ainsi, tout risque d'erreur de transmission du faisceau secondaire III renvoyé par le miroir rotatif 34 vers l'entrée 42 est écarté.

En conséquence, on comprend qu'à partir de l'émission par une source principale lumineuse 30 d'un faisceau principal I, les moyens de traitement optique principal 32 permettent de générer un faisceau lumineux principal traité II qui soit suffisamment convergent pour atteindre le miroir rotatif 34 de manière précise afin d'être renvoyé en un faisceau secondaire III vers une des entrées 42 des N fibres optiques 12.

Si le boîtier 10 était mobile, on aurait plus de difficulté à s'assurer d'une bonne transmission du faisceau secondaire III renvoyé par le miroir rotatif 34 vers l'entrée 42 d'une fibre optique 12, et donc aucune certitude quant à la mesure de la luminance effectuée par rapport aux premiers et seconds angles d'incidences $\gamma$ et $\beta$.

Comme représenté sur la figure 4, pour permettre de générer N faisceaux secondaires homogènes et collimatés à partir des faisceaux secondaires III renvoyés par le miroir rotatif 34, chacun des N ensembles de traitement optique secondaire 16 comporte un condenseur 44 comportant au moins une optique de traitement. En l'espèce, le condenseur 44 comporte une première lentille secondaire convergente 46 et une deuxième lentille secondaire convergente 48. Ces deux première et deuxième lentilles secondaires convergentes 46 et 48 sont préférentiellement semblables et présentent chacune un diamètre préférentiellement de l'ordre de 25 mm avec une focale de l'ordre de 15 mm.

En outre, pour que le faisceau secondaire puisse être homogène, chacun des N ensembles de traitement optique secondaire 16 comporte un diaphragme 50 préférentiellement elliptique qui est disposé avant l'entrée 52 du condenseur 44.

La figure 5 montre une vue en coupe du diaphragme elliptique 50 qui présente un grand axe A1 de longueur L et un petit axe A2 de longueur I. La longueur I du petit axe A2 est obtenue par la multiplication de la longueur L du grand axe A1 par le cosinus du premier angle d'incidence $\gamma$, soit :

$$I = L \times \cos(\gamma).$$

En se référant à nouveau à la figure 4, chacun des N ensembles de traitement optique secondaire 16 comporte en outre une optique collimatrice, en l'espèce une troisième lentille secondaire convergente 54 ayant préférentiellement un diamètre de l'ordre de 70 mm avec une focale de l'ordre de 100 mm.

Cette troisième lentille secondaire convergente 54 présente un foyer objet FO54 et un foyer image (non représenté), ledit foyer objet FO54 étant confondu avec le foyer image d'une optique de traitement du condenseur 44, en l'espèce avec le foyer image FI48 de la deuxième lentille secondaire convergente 48. En conséquence, tous les faisceaux secondaires III' issus de cette deuxième lentille secondaire convergente 48 convergent au foyer objet FO54 de la troisième lentille secondaire convergente 54, de sorte que tous les faisceaux secondaires IV issus de cette troisième lentille 54 sont parallèles entre-eux.

Ainsi, les faisceaux secondaires IV issus d'un des N ensembles de traitement optique secondaire 16 sont homogènes et collimatés.

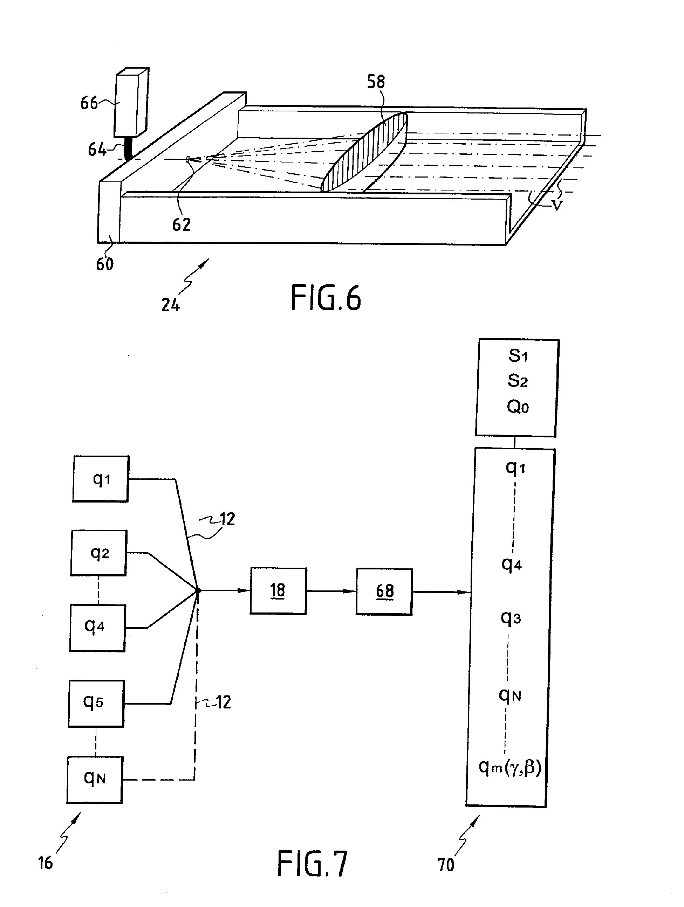

Afin de pouvoir observer une surface plus grande que la surface éclairée, le capteur de luminance 24 comporte une lentille convergente 58, un diaphragme 60 de faible ouverture et un détecteur 66, comme illustré sur la figure 6.

La lentille convergente 58 est préférentiellement de diamètre de l'ordre de 70 mm avec une focale de l'ordre de 150 mm et le diaphragme 60 présente une ouverture qui est préférentiellement de l'ordre de 1 mm de diamètre. En conséquence, les faisceaux parallèles V réfléchis par la surface sous l'angle d'observation $\alpha$ de 1° (voir aussi figure 1A) convergent vers l'entrée 62 d'une multifibre optique 64 de diamètre préférentiellement de l'ordre de 3 mm pour conduire la lumière vers le détecteur 66.

Sous certaines conditions d'éclairage, les matériaux analysés réfléchissent très peu la lumière, d'où la nécessité de disposer d'un détecteur très sensible. En l'espèce, le détecteur 66 du capteur de luminance 24 est préférentiellement un photomultiplicateur qui permet d'amplifier le flux lumineux transmis dans la multifibre optique 64.

En se référant à nouveau à la figure 1B, à partir de la mesure par le capteur 24 de la luminance L de la surface du matériau 22 à analyser pour chaque paire de valeurs des premier et second angles d'incidence $\gamma$ et $\beta$ et sous l'angle d'observation $\alpha$ de 1°, on détermine à l'aide des moyens d'acquisition et de traitement du signal 18, la luminance réfléchie q ($\gamma$, $\beta$) à partir de la relation suivante :

$$q(\gamma, \beta) = \frac{L}{E_h}$$

$$\text{où} \begin{cases} L \text{ représente la luminance de la surface analysée, mesurée sous 1°} \\ E_h \text{ représente l'éclairement horizontal arrivant sur la surface} \end{cases}$$

Comme on a $E_h = E_p \times \cos(\gamma)$ où $E_p$ représente l'éclairement arrivant sensiblement transversalement à la surface analysée, on obtient

$$q(\gamma, \beta) = \frac{L}{E_p \times \cos(\gamma)}.$$

La mesure de $E_p$ se fait directement à partir de la mesure de la luminance obtenue pour le premier ensemble de traitement optique secondaire 16, placé à $\gamma = 0°$ et $\beta = 0°$.

Comme illustré schématiquement sur la figure 7, le dispositif de mesure comporte en outre des moyens de reconstitution 68 de la luminance de ladite surface insolée en fonction d'au moins un premier et un second angles d'incidence $\gamma$ et $\beta$ choisis, à partir d'une pluralité de caractéristiques photométriques déterminées pour une pluralité de premier et second angles d'incidence $\gamma$ et $\beta$ fixés.

Le nombre de premiers et seconds angles d'incidence différents imposés par le CIE étant de cinq cent quatre-vingt luminances (matrice correspondant à vingt-neuf premiers angles d'incidence $\gamma$, dont la tangente de chacun est comprise entre 0 et 12, et vingt seconds angles d'incidence $\beta$, chacun étant compris entre 0 et 180°), il n'est pas possible de disposer d'autant de faisceaux lumineux secondaires IV.

Le calcul des coefficients de spécularités $S_1$ et $S_2$ (représentant la réflexion spéculaire dans une direction privilégiée) et de la clarté $Q_0$ est préférable pour permettre un bon remplissage de la matrice 70 précitée à partir de la mesure d'au moins une paire de luminances.

Chacune de ces trois mesures impose des dispositions particulières d'ensembles de traitement optique secondaire à des angles précis, en plus de celui permettant la détermination de l'éclairement $E_p$.

Le coefficient de spécularité $S_1$ est obtenu directement par un rapport de deux mesures (à partir d'un couple de deux valeurs d'angles d'incidence $\gamma$ et $\beta$), tandis que la clarté $Q_0$ et le coefficient de spécularité $S_2$ s'obtiennent par l'intermédiaire des formules respectives ci-après.

$$\begin{cases} Q_0 = \dfrac{\int q(\gamma,\beta)d\Omega}{\Omega} \text{ où } \Omega \text{ est l'angle solide comprenant les valeurs de } \gamma \text{ et } \beta \\ S_2 = \dfrac{Q_0}{q(0°,0)} \end{cases}$$

alors que $S_1 = \dfrac{q(0°,2)}{q(0°,0)}$.

En conséquence, seules deux paires de premiers et seconds angles d'incidence $\gamma$ et $\beta$ sont imposées, préférentiellement on choisit les deux couples $(\gamma, \tan \beta)$ suivants $(0°, 0)$ et $(0°, 2)$.

Ainsi, on obtient la mesure des caractéristiques $E_p$ et $S_1$ à partir des deux paires de premiers et seconds angles d'incidence $\gamma$ et $\beta$ imposés précités.

| Mesure | Premier angle d'incidence $\gamma$ | $\tan \gamma$ | Second angle d'incidence $\beta$ |
|--------|-----------------------------------|---------------|----------------------------------|
| Ep | 0° | 0 | 0° |
| $S_1$ | 0° | 0 | 0° |
| | 63,5° | 2 | 0° |

Pour des raisons d'encombrement du dispositif, il est préférable de diminuer au maximum le nombre d'ensembles de traitement optique secondaire, tout en s'assurant d'un nombre suffisant permettant ensuite par des techniques de lissage non détaillées ici de reconstruire l'ensemble des luminances $q_m$ recherchées, préférentiellement les cinq cent quatre-vingt souhaitées par le CIE (m=580).

En conséquence, le dispositif comporte préférentiellement vingt-sept (N=27) ensembles de traitement optique secondaire et vingt-sept fibres optiques 12 judicieusement disposés, dont deux des ensembles de traitement optique secondaire sont imposés aux emplacements précités $(0°, 0)$ et $(0°, 2)$, qui permettent d'obtenir N luminances $q_1, q_2,..., q_4, q_5,..., q_N$ et de construire $E_p$, $S_1$, $S_2$ et $Q_0$. Pour permettre une reconstruction correcte de la matrice, il est préférable de disposer les ensembles de traitement optique dans des valeurs d'angles faibles, en particulier pour le premier angle d'incidence $\gamma$.

Par exemple, le premier angle d'incidence $\gamma$ pourra par exemple être choisi pour obtenir une tangente comprise entre 0 et 5, préférentiellement parmi les valeurs de l'ordre de 0,5, 1, 2 et 4, tandis que le second angle d'incidence $\beta$ pourra par exemple être choisi entre 0° et 200°, préférentiellement parmi les valeurs de l'ordre de 0°, 15°, 30°, 60°, 90°, 135° et 180°.

## Revendications

1. Dispositif de mesure de caractéristiques photométriques $(q(\gamma, \beta))$ d'un matériau (22), **caractérisé en ce qu'**il comporte :

   - des moyens d'élaboration (16, 30, 32, 34) pour élaborer un arrangement de N faisceaux lumineux secondaires collimatés et homogènes (IV), chacun desdits N faisceaux lumineux (IV) permettant d'insoler successivement une surface déterminée (20, 28) dudit matériau (22) selon un premier angle d'incidence $\gamma$ défini par rapport à la normale ($\vec{n}$) à ladite surface à insoler (20, 28) et selon un second angle d'incidence $\beta$ défini dans un plan (P) de ladite surface à insoler (20, 28),
   - un capteur de luminance (24) destiné à capter la luminance réfléchie (V) par ladite surface insolée (20, 28) selon lesdits premier et second angles d'incidence γ et β par un desdits faisceaux lumineux secondaires collimatés et homogènes (IV), ledit capteur de luminance (24) étant écarté d'un angle d'observation α sensiblement égal à 1° par rapport audit plan (P) de la surface à insoler (20, 28),

- des moyens d'acquisition et de traitement (18) du signal transmis par ledit capteur de luminance (24) en relation avec lesdits premier et second angles d'incidence γ et β pour élaborer lesdites caractéristiques photométriques (q(γ, β)) dudit matériau (22) insolé.

2. Dispositif selon la revendication précédente, **caractérisé en ce que** pour déterminer les caractéristiques photométriques (q(γ, β)) dudit matériau (22) insolé, il faut insoler une surface déterminée (28), et **en ce que** chacun desdits faisceaux lumineux secondaires (IV) n'insole qu'une partie (20) de ladite surface déterminée (28).

3. Dispositif selon la revendication précédente, **caractérisé en ce qu'**il comprend en outre des moyens de déplacement (26) pour que chacun desdits faisceaux lumineux secondaires (IV) insole successivement chacune desdites parties (20) de ladite surface déterminée (28), et **en ce que** lesdits moyens d'acquisition et de traitement (18) du signal transmis par ledit capteur de luminance (24) comportent des moyens de traitement et d'élaboration (19) des caractéristiques photométriques globales (q(γ, β)) de ladite surface déterminée (28) à partir du signal transmis par ledit capteur de luminance (24) pour chacune desdites parties (20) de ladite surface déterminée (28) en relation avec lesdits premier et second angles d'incidence γ et β.

4. Dispositif selon l'une quelconque des revendications précédentes, **caractérisé en ce que** lesdits moyens d'élaboration (16, 30, 32, 34) comportent une source lumineuse principale (30) émettant un faisceau lumineux principal (I) et des moyens de traitement optique principal (32) dudit faisceau lumineux principal (I) pour générer un faisceau principal traité (II).

5. Dispositif selon la revendication précédente, **caractérisé en ce que** lesdits moyens d'élaboration (16, 30, 32, 34) comportent N ensembles de traitement optique secondaire (16) et des moyens directifs (34) pour diriger successivement ledit faisceau principal traité (II, III) vers une entrée (42) d'un desdits N ensembles de traitement optique secondaire (16), chacun desdits N ensembles de traitement optique secondaire (16) permettant de traiter ledit faisceau lumineux principal traité (II, III) en un faisceau lumineux secondaire (IV) homogène et collimaté, et **en ce que** lesdits moyens de traitement optique principal (32) sont situés entre ladite source lumineuse principale (30) et lesdits N ensembles de traitement optique secondaire (16).

6. Dispositif selon la revendication précédente, **caractérisé en ce que** lesdits moyens directifs comportent un miroir rotatif (34) disposé entre lesdits moyens de traitement optique principal (32) et lesdits N ensembles de traitement optique secondaire (16).

7. Dispositif selon l'une quelconque des revendications 4 à 6, **caractérisé en ce que** lesdits moyens de traitement optique principal (32) comportent un miroir sphérique (36) et au moins une optique de traitement (38, 40).

8. Dispositif selon l'une quelconque des revendications 5 à 7, **caractérisé en ce que** chacun desdits N ensembles de traitement optique secondaire (16) comporte un condenseur (44) comprenant au moins une optique de traitement (46, 48).

9. Dispositif selon l'une quelconque des revendications 5 à 8, **caractérisé en ce que** chacun desdits N ensembles de traitement optique secondaire (16) comporte un diaphragme elliptique (50).

10. Dispositif selon la revendication précédente, **caractérisé en ce que** ledit diaphragme elliptique (50) présente un grand axe (A1) de longueur L et un petit axe (A2) de longueur l, la longueur l dudit petit axe étant obtenue par la multiplication de la longueur L dudit grand axe par le cosinus dudit premier angle d'incidence γ.

11. Dispositif selon l'une quelconque des revendications 5 à 10, **caractérisé en ce que** chacun desdits N ensembles de traitement optique secondaire (16) comporte une optique collimatrice (54).

12. Dispositif selon les revendications 8 et 11, **caractérisé en ce que** ladite optique de traitement (48) et ladite optique collimatrice (54), de chacun desdits N ensembles de traitement optique secondaire (16), présentent respectivement un foyer image (FI48) et un foyer objet (FO54), et **en ce que** ledit foyer image (FI48) de ladite optique de traitement (48) est confondu avec ledit foyer objet (FO54) de ladite optique collimatrice (54).

**13.** Dispositif selon l'une quelconque des revendications précédentes, **caractérisé en ce que** ledit capteur de luminance (24) comporte un photomultiplicateur (66).

**14.** Dispositif selon l'une quelconque des revendications précédentes, **caractérisé en ce que** la tangente dudit premier angle d'incidence y est comprise entre 0 et 12.

**15.** Dispositif selon l'une quelconque des revendications précédentes, **caractérisé en ce que** ledit second angle d'incidence $\beta$ est compris entre 0 et 180°.

**16.** Dispositif selon l'une quelconque des revendications précédentes, **caractérisé en ce qu'**il comporte en outre des moyens de reconstitution (68) de la luminance ($S_1$, $S_2$, $Q_0$, $q_4$, $q_5$, ..., $q_m$) de ladite surface insolée (20, 28) en fonction d'au moins un premier et un second angles d'incidence $\gamma$ et $\beta$ choisis, à partir d'une pluralité de caractéristiques photométriques déterminées ($q_1$, $q_2$, ..., $q_4$, $q_5$, ..., $q_N$) pour une pluralité de premier et second angles d'incidence $\gamma$ et $\beta$ fixés.

**17.** Dispositif selon la revendication 16, **caractérisé en ce qu'**un desdits N ensembles de traitement optique secondaire est disposé selon un premier angle d'incidence $\gamma$ dont la tangente est sensiblement égale à 2 et selon un second angle d'incidence $\beta$ sensiblement nul.

**18.** Dispositif selon l'une quelconque des revendications 16 et 17, **caractérisé en ce qu'**un desdits N ensembles de traitement optique secondaire est disposé selon un premier angle d'incidence $\gamma$ et un second angle d'incidence $\beta$ sensiblement nuls.

**19.** Dispositif selon l'une quelconque des revendications 16 à 18, **caractérisé en ce qu'**un desdits N ensembles de traitement optique secondaire est disposé selon un premier angle d'incidence $\gamma$ sensiblement égal à 45° et selon un second angle d'incidence $\beta$ sensiblement égal à 90°.

**20.** Dispositif selon la revendication 5 et l'une quelconque des revendications précédentes, **caractérisé en ce qu'**il comporte en outre un support mobile (26) permettant le déplacement desdits N ensembles de traitement optique secondaire (16) et dudit capteur de luminance (24).

FIG.1A

FIG.1B

FIG.2

FIG.3

FIG.4

FIG.5

FIG.6

FIG.7

Office européen
des brevets

**RAPPORT DE RECHERCHE EUROPEENNE**

Numéro de la demande

EP 03 29 1458

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X<br>Y | US 4 583 858 A (LEBLING KARL ET AL)<br>22 avril 1986 (1986-04-22)<br><br>* colonne 3, ligne 39 - ligne 44 *<br>* colonne 3, ligne 60 - ligne 62 *<br>* colonne 4, ligne 52 - ligne 66 *<br>* colonne 5, ligne 50 - ligne 55 *<br>--- | 1-5,<br>13-20<br>6,7,9-11 | G01N21/47 |
| Y | EP 0 286 165 A (ADVANCED PROD AUTOMATION)<br>12 octobre 1988 (1988-10-12)<br>* colonne 1, ligne 10 - ligne 42; figure 4<br>*<br>--- | 6 | |
| Y | WO 87 07381 A (ROIBOX OY)<br>3 décembre 1987 (1987-12-03)<br>* page 1, ligne 19 - ligne 24 *<br>* page 7, ligne 8 - ligne 24 *<br>--- | 7 | |
| Y | US 4 572 672 A (ORCHARD STANLEY E ET AL)<br>25 février 1986 (1986-02-25)<br>* colonne 3, ligne 14 - ligne 24 *<br>* colonne 7, ligne 29 - ligne 36 *<br>--- | 9,10 | DOMAINES TECHNIQUES RECHERCHES (Int.Cl.7)<br><br>G01N |
| X<br>Y | EP 0 375 317 A (DU PONT)<br>27 juin 1990 (1990-06-27)<br><br>* page 5, ligne 37 - ligne 38 *<br>* page 6, ligne 3 - ligne 9; figures 1-3 *<br>--- | 1-3,<br>13-20<br>11 | |
| A | EP 0 335 192 A (PACIFIC SCIENTIFIC CO)<br>4 octobre 1989 (1989-10-04)<br>* colonne 1, ligne 34 - ligne 39 *<br>* colonne 2, ligne 10 - ligne 23 *<br>--- | 1-20 | |

-/--

Le présent rapport a été établi pour toutes les revendications

| Lieu de la recherche | Date d'achèvement de la recherche | Examinateur |
|---|---|---|
| BERLIN | 21 octobre 2003 | Navas Montero, E |

## RAPPORT DE RECHERCHE EUROPEENNE

**Office européen des brevets**

**Numéro de la demande**

EP 03 29 1458

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int.Cl.7) |
| A | BOMMEL, BURGHOUT, COBB, FISHER, GORKUM, HEYSTRAETEN ET AL.: "Road Surfaces and lighting" INTERNATIONAL COMMISSION ON ILLUMINATION. JOINT TECHNICAL REPORT CIE/PIARC, vol. 66, 1984, XP002258261 Paris (France) * page 16 - page 21 * * page 45 - page 53 * * page 62 - page 64 * ----- | 1,14-18 | |
| | | | **DOMAINES TECHNIQUES RECHERCHES (Int.Cl.7)** |

Le présent rapport a été établi pour toutes les revendications

| Lieu de la recherche | Date d'achèvement de la recherche | Examinateur |
|---|---|---|
| BERLIN | 21 octobre 2003 | Navas Montero, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P04C02)

EP 1 376 101 A1

**ANNEXE AU RAPPORT DE RECHERCHE EUROPEENNE**
**RELATIF A LA DEMANDE DE BREVET EUROPEEN NO.**

EP 03 29 1458

La présente annexe indique les membres de la famille de brevets relatifs aux documents brevets cités dans le rapport de recherche européenne visé ci-dessus.
Lesdits membres sont contenus au fichier informatique de l'Office européen des brevets à la date du
Les renseignements fournis sont donnés à titre indicatif et n'engagent pas la responsabilité de l'Office européen des brevets.

21-10-2003

| Document brevet cité au rapport de recherche | | Date de publication | Membre(s) de la famille de brevet(s) | | Date de publication |
|---|---|---|---|---|---|
| US 4583858 | A | 22-04-1986 | DE | 3145633 A1 | 11-08-1983 |
| | | | AT | 32951 T | 15-03-1988 |
| | | | DE | 3278223 D1 | 14-04-1988 |
| | | | EP | 0079517 A1 | 25-05-1983 |
| | | | JP | 1781660 C | 13-08-1993 |
| | | | JP | 4029019 B | 15-05-1992 |
| | | | JP | 58127148 A | 28-07-1983 |
| EP 0286165 | A | 12-10-1988 | NL | 8700716 A | 17-10-1988 |
| | | | EP | 0286165 A1 | 12-10-1988 |
| | | | JP | 63256911 A | 24-10-1988 |
| WO 8707381 | A | 03-12-1987 | FI | 862222 A | 28-11-1987 |
| | | | DE | 3790279 T0 | 03-05-1989 |
| | | | WO | 8707381 A1 | 03-12-1987 |
| US 4572672 | A | 25-02-1986 | AT | 32631 T | 15-03-1988 |
| | | | AU | 558197 B2 | 22-01-1987 |
| | | | AU | 1135083 A | 25-08-1983 |
| | | | BR | 8300802 A | 16-11-1983 |
| | | | CA | 1193467 A1 | 17-09-1985 |
| | | | DE | 3375740 D1 | 31-03-1988 |
| | | | DK | 64683 A ,B, | 20-08-1983 |
| | | | EP | 0087222 A2 | 31-08-1983 |
| | | | ES | 8402936 A1 | 16-05-1984 |
| | | | FI | 830480 A | 20-08-1983 |
| | | | GB | 2115141 A ,B | 01-09-1983 |
| | | | IE | 54038 B1 | 24-05-1989 |
| | | | IN | 159549 A1 | 23-05-1987 |
| | | | JP | 1622832 C | 25-10-1991 |
| | | | JP | 2048054 B | 23-10-1990 |
| | | | JP | 58148942 A | 05-09-1983 |
| | | | MX | 162872 B | 02-07-1991 |
| | | | NO | 830330 A | 22-08-1983 |
| | | | NZ | 203140 A | 20-03-1985 |
| | | | PT | 76264 A ,B | 01-03-1983 |
| | | | ZA | 8300671 A | 28-12-1983 |
| EP 0375317 | A | 27-06-1990 | US | 4917495 A | 17-04-1990 |
| | | | AU | 614683 B2 | 05-09-1991 |
| | | | AU | 4699889 A | 28-06-1990 |
| | | | CA | 2005367 A1 | 20-06-1990 |
| | | | DE | 68928401 D1 | 27-11-1997 |
| | | | DE | 68928401 T2 | 07-05-1998 |
| | | | EP | 0375317 A2 | 27-06-1990 |
| | | | JP | 2245623 A | 01-10-1990 |

EPO FORM P0460

Pour tout renseignement concernant cette annexe : voir Journal Officiel de l'Office européen des brevets, No.12/82

15

**ANNEXE AU RAPPORT DE RECHERCHE EUROPEENNE
RELATIF A LA DEMANDE DE BREVET EUROPEEN NO.**

EP 03 29 1458

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-10-2003

| Document brevet cité au rapport de recherche | Date de publication | Membre(s) de la famille de brevet(s) | Date de publication |
|---|---|---|---|
| EP 0375317 A | | NZ 231835 A | 25-10-1991 |
| EP 0335192 A | 04-10-1989 | US 4886355 A | 12-12-1989 |
| | | EP 0335192 A2 | 04-10-1989 |

EPO FORM P0460

Pour tout renseignement concernant cette annexe : voir Journal Officiel de l'Office européen des brevets, No.12/82